# EUROPEAN PATENT SPECIFICATION

(11) **EP 3 758 326 B1**
(45) Date of publication and mention of the grant of the patent: **23.02.2022**
(21) Application number: 20163540.6
(22) Date of filing: 17.03.2020
(51) Int. Cl.: H04L 29/06, G06F 8/65, G06F 21/57, H04L 12/24, H04L 12/26

(54) **SECURE UPDATING OF COMPUTING SYSTEM FIRMWARE**
SICHERE AKTUALISIERUNG DER FIRMWARE EINES COMPUTING-SYSTEMS
MISE À JOUR SÉCURISÉE DE MICROLOGICIEL DE SYSTÈME INFORMATIQUE

(30) Priority: 28.06.2019 US 201916457324
(43) Date of publication of application: 30.12.2020
(73) Proprietor: INTEL Corporation, Santa Clara, CA 95054 (US)
(72) Inventor: Dewan, Prashant, Portland, OR 97229 (US); Kotary, Karunakara, Portland, OR 97229 (US)
(74) Representative: Goddar, Heinz J.

(56) References cited:
- US-A1- 2007 300 051
- US-A1- 2014 122 329
- US-B1- 8 924 952
- Anonymous: "Firmware - Wikipedia", , 27 June 2019 (2019-06-27), XP055724627, Retrieved from the Internet: URL:https://en.wikipedia.org/w/index.php?t itle=Firmware&oldid=903663150 [retrieved on 2020-08-24]
- Anonymous: "Non-A/B vs A/B seamless update | System on Module Blog", , 6 December 2017 (2017-12-06), XP055724637, Retrieved from the Internet: URL:https://www.e-consystems.com/blog/syst em-on-module-SOM/android-non-a-b-vs-a-b-se amless-ota-firmware-update/ [retrieved on 2020-08-24]

## Description

### TECHNICAL FIELD

This disclosure relates in general to the field of computing systems and, more particularly, to updating firmware of a computing system.

### BACKGROUND

A computing system may include various types of firmware enabling the functionality of the computing system. As one example, a computing system may store a Basic Input/Output System (BIOS) (or similar firmware such as firmware compatible with Extensible Firmware Interface (EFI) or Unified EFI (UEFI)) comprising non-volatile firmware which is the first software to run when a computing system is powered on, initializes and tests hardware during the boot process, and provides runtime services for operating systems and applications (though in some computing systems the BIOS is not used after the boot is complete). As another example, a computing system may store device firmware, such as firmware for a storage device, network controller, graphics processing unit, or other component device of the computing system. As yet another example, a computing system may store microcode that performs hardware-level instructions to perform higher-level instructions executed by a processor.

US2007300051A1 discloses managing assets utilizing an out-of-band microcontroller and, more specifically, to communicating with an administration agent utilizing an out-of-band microcontroller and a shared memory space.

The Wikipedia article "Firmware, 27 June 2019 (2019-06-27), URL:https://en.wikipedia.org/w/index.php?title=Firmware&oldid=903663150" discloses that in computing, firmware is a specific class of computer software that provides the low-level control for the device's specific hardware. Firmware can either provide a standardized operating environment for the device's more complex software (allowing more hardware-independence), or, for less complex devices, act as the device's complete operating system, performing all control, monitoring and data manipulation functions. Typical examples of devices containing firmware are embedded systems, consumer appliances, computers, computer peripherals, and others. Almost all electronic devices beyond the simplest contain some firmware.

US2014122329A1 discloses a method and device for maintaining software components in a portable electronic device. The device includes memory storing software components executable from the device, with associated pairs of logical storage partitions for storing different versions of the software components, a data interface for coupling the device to a host computer, a contactless interface for receiving payment token data from a contactless payment token, and a cellular network interface for communication of data over a cellular network. An upgrade process is initiated when the device is coupled to the host computer. Data including a different version of at least one of said software components is received, installed and executed to initiate a payment transaction with a remote system. Payment token data is received via the contactless interface means and transmitted to the remote system.

The article "Android - Non-A/B vs A/B seamless OTA firmware update, System on Module Blog, 6 December 2017 (2017-12-06), URL:https:/www.e-consystems.com/blog/system-on-module-SOM/android-non-a-b-vs-a-b-seamless-ota-firmware-update" discloses that Android devices without A/B partitions have the following partitions: boot, system, vendor, userdata, cache, recovery, misc. The life cycle of Non-A/B system update is a follows. The devices perform checks with OTA servers and get notified of the availability of an update; downloads OTA packages to a cache or data partition; cryptographic signature is verified against the certificates in /system/etc/security, f everything looks fine, user is prompted to install the update; the device reboots into recovery mode; recovery verifies the cryptographic signature of the package against the public keys in /res/keys(part of the RAM disk contained in the ecovery partition; extracts the package to update the boot, system, and/or vendor partitions as necessary; the system partition contains the contents for the new recovery partition(optional); the device reboots normally. The newly updated boot partition is loaded, and it mounts and starts executing binaries in the newly updated system partition. As part of normal startup, the system checks the contents of the recovery partition against the desired contents (which were previously stored as a file in /system). They are different, so the recovery partition is re-flashed with the desired contents from system partition.

US8924952B1 discloses a computing device including a data store having two or more partitions. A first partition can be used to store information, to host a first operating system, and to perform computing tasks requested by a user. The computing tasks can be performed by the first operating system and can use/manipulate the stored information. The computing device can communicate over a network with a software server to determine whether a software update for the computing device is available for download. The software update can be downloaded into the second partition autonomously from the computing tasks being performed by the first operating system in the first partition. The downloaded software update can also be installed into the second partition autonomously from the computing tasks being performed. When the device is rebooted, either the first operating system or the second operating system (if the installation was successful) can be booted.

### The invention is defined in the independent claims.

### Embodiments of the invention are defined in the dependent claims.

Embodiments of the invention comprise a system comprising a controller to operate in an out of band fashion with respect to a central processing unit, the controller comprising a memory; and a processing element to request a firmware module from a computing system over a network; and cause the firmware module to be communicated to a storage controller for installation on a storage device. The processing element of the controller is to instruct the central processing unit to cease access to a previous version of the firmware module prior to causing the firmware module to be communicated to the storage controller for installation on the storage device.

In embodiments of the invention, causing the firmware module to be communicated to the storage controller for installation on the storage device comprises buffering the firmware module in the memory and transmitting the firmware module from the memory to the storage controller.

In an embodiment, causing the firmware module to be communicated to the storage controller for installation on the storage device comprises requesting that the firmware module be transferred via remote direct memory access (RDMA) into a system memory coupled to the central processing unit; and communicating a location of the firmware module in the system memory to the storage controller.

In an embodiment, the processing element of the controller is to periodically poll the computing system over the network to inquire whether a firmware update is available; receive an indication from the computing system that a firmware update is available; and request the firmware module from the computing system responsive to the indication.

In an embodiment, the processing element of the controller is to request the firmware module from the computing system over the network responsive to a trigger.

In an embodiment, the trigger comprises a determination that a Basic Input/Output System (BIOS) module of the system is unbootable and wherein the firmware module is a BIOS module to replace the unbootable BIOS module.

In an embodiment, the storage controller is to store the firmware module on a first partition of the storage device that is separate from a second partition that stores a previous version of the firmware module.

In an embodiment, the system comprises the central processing unit and the storage controller.

In another embodiment, the system comprises the storage device or a network controller to interface with the network.

Embodiments of the invention comprise at least one non-transitory machine readable storage medium having instructions stored thereon and the instructions when executed by a machine are to cause the machine to request, by a controller that operates in an out of band fashion with respect to a central processing unit, a firmware module from a computing system over a network; and cause the firmware module to be communicated to a storage controller for installation on a storage device. The instructions when executed by the machine are to cause the machine to instruct the central processing unit to cease access to a previous version of the firmware module prior to causing the firmware module to be communicated to the storage controller for installation on the storage device.

In an embodiment, causing the firmware module to be communicated to the storage controller for installation on the storage device comprises buffering the firmware module in a memory and transmitting the firmware module from the memory to the storage controller.

In an embodiment, causing the firmware module to be communicated to the storage controller for installation on the storage device comprises requesting that the firmware module be transferred via remote direct memory access (RDMA) into a system memory coupled to the central processing unit; and communicating a location of the firmware module in the system memory to the storage controller.

In an embodiment, the instructions when executed by the machine are to cause the machine to periodically poll the computing system over the network to inquire whether a firmware update is available; receive an indication from the computing system that a firmware update is available; and request the firmware module from the computing system responsive to the indication.

In another embodiment, the instructions when executed by the machine to cause the machine to request the firmware module from the computing system over the network responsive to a trigger.

In an embodiment, the trigger comprises a determination that a Basic Input/Output System (BIOS) module is unbootable and wherein the firmware module is a BIOS module to replace the unbootable BIOS module.

In an embodiment, the instructions when executed by the machine are to cause the machine to store the firmware module on a first partition of the storage device that is separate from a second partition that stores a previous version of the firmware module.

In an embodiment, the instructions when executed by the machine are to cause the machine to communicate with the central processing unit and the storage controller.

In an embodiment, the instructions when executed by the machine are to cause the machine to communicate with a network controller to interface with the network.

### BRIEF DESCRIPTION OF THE DRAWINGS

FIG. 1 illustrates a computing system coupled to a cloud service in accordance with certain embodiments.
FIG. 2 illustrates an out of band (OOB) controller in accordance with certain embodiments.
FIG. 3 illustrates a flow for updating computing system firmware in accordance with certain embodiments.
FIG. 4 illustrates a second flow for updating computing system firmware in accordance with certain embodiments.
FIG. 5 illustrates a third flow for updating computing system firmware in accordance with certain embodiments.
FIG. 6 illustrates a computing system including a multicore processor in accordance with certain embodiments.
FIG. 7 illustrates a system on a chip (SoC) in accordance with certain embodiments.

Like reference numbers and designations in the various drawings indicate like elements.

### DESCRIPTION OF EXAMPLE EMBODIMENTS

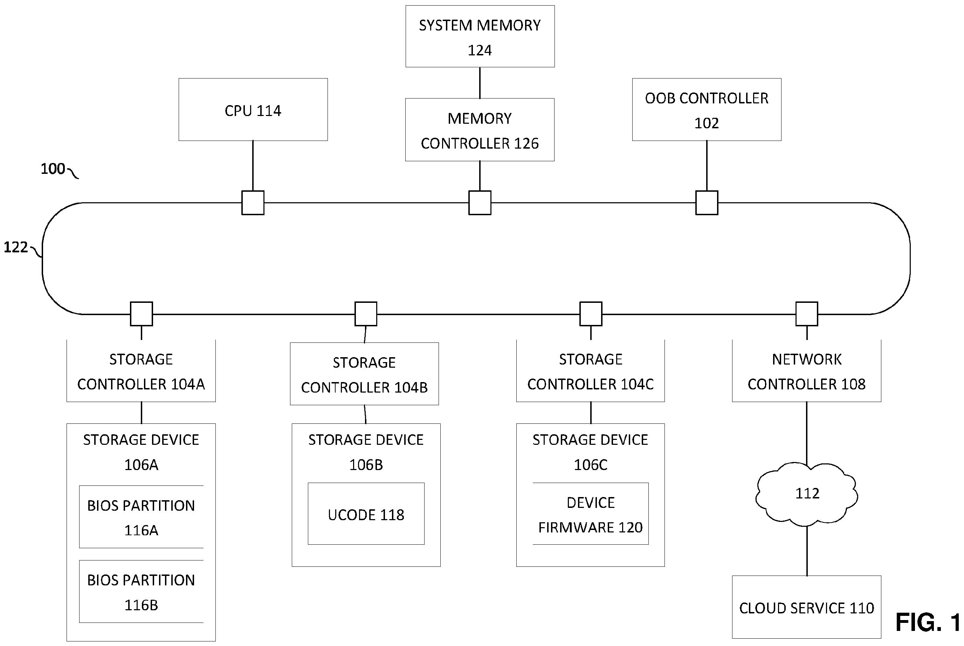

FIG. 1 illustrates a computing system 100 coupled to a cloud service 110 in accordance with certain embodiments. Computing system 100 includes various storage devices 106 (e.g., 106A-106C) that store firmware, such as BIOS (e.g., stored in BIOS partitions 116A and 116B), microcode 118, and device firmware 120. Computing system 100 also includes storage controllers 104 (e.g., 104A-104C), network controller 108, central processing unit (CPU) 114, interconnect 122, and system memory 124. Computing system 100 may be coupled to cloud service 110 via network 112.

Traditionally, firmware update solutions have depended on using operating system (OS) based BIOS and microcode updates where the original equipment manufacturer (OEM) delivers the update module through, e.g., a Windows Update (WU) or other proprietary application running on the operating system and then the platform firmware consumes the update module. This mechanism has been used both in the phone industry and the personal computing industry.

In some scenarios, an attack or other event may corrupt the firmware (e.g., BIOS or microcode) such that the computing system is unable to boot to the operating system. This may prevent the application of firmware patches through the traditional method of using the operating system to retrieve and apply firmware updates. In other scenarios, network connectivity through the operating system may be impaired, preventing the download of a firmware patch. Moreover, applying firmware updates through the operating system may interrupt normal operation and impair the user experience (e.g., through required user approval and/or rebooting).

Various embodiments of the present disclosure provide an out-of-band (OOB) controller (e.g., 102) to receive a firmware module over a network (e.g., from a computing system of cloud service 110) and to cause the update to be applied to one or more storage devices (e.g., 106A, 106B, or 106C). In various embodiments, the OOB controller may operate in an out of band fashion with respect to CPU 114. For example, the OOB controller 102 may function independently of (e.g., without utilizing) the CPU 114 and the operating system, such that the OOB controller may perform its functionality even if the CPU 114 is powered down or the computing system 100 is unable to boot the BIOS and/or the operating system. For example, firmware updates may be performed even if the existing BIOS or operating system is not bootable. Thus, even if a disk or BIOS partition is corrupted, the OOB controller 102 can restore the computing system 100 to a bootable state.

In some embodiments, a firmware update may be executed by the OOB controller 102 with implicit acknowledgement of the user (without requiring the user to explicitly agree to a particular firmware update). Moreover, since the update is occurring in an out-of-band fashion, the update may be unnoticeable to the user such that if the user is using the computing system, the firmware update will not break the user's flow or steal CPU cycles from the user. In some embodiments, when the computing system 100 is booted the next time after an update to the BIOS by the OOB controller 102, the computing system 100 can automatically switch to the updated BIOS partition (and may revert back to the previous version if the update is determined to be faulty), thus providing fault tolerance.

Computing system 100 may include one or more storage devices 106 to store updatable firmware. A storage device 106 may store any type of firmware. For example, storage device 106A stores BIOS code in partitions 116 (e.g., 116A and 116B), storage device 106B stores microcode 118, and storage device 106C stores device firmware 120. Any other suitable type of firmware such as system firmware or manageability firmware may be stored by the one or more storage devices 106 and updated via the methods described herein.

In various embodiments, storage devices 106 may comprise non-volatile memory. Non-volatile memory is a storage medium that does not require power to maintain the state of data stored by the medium. Nonlimiting examples of nonvolatile memory may include any or a combination of: solid state memory (such as planar or 3D NAND flash memory or NOR flash memory), 3D crosspoint memory, memory devices that use chalcogenide phase change material (e.g., chalcogenide glass), byte addressable nonvolatile memory devices, ferroelectric memory, silicon-oxide-nitride-oxide-silicon (SONOS) memory, polymer memory (e.g., ferroelectric polymer memory), ferroelectric transistor random access memory (Fe-TRAM) ovonic memory, nanowire memory, electrically erasable programmable read-only memory (EEPROM), other various types of non-volatile random access memories (RAMs), and magnetic storage memory.

In various embodiments, a storage device 106 or a combination of a storage device 106 and a storage controller 104 may be a Serial Peripheral Interface (SPI)-NOR flash device, a Universal Flash Storage (UFS) device, an embedded Multi-Media Controller (eMMC) device, a Non-Volatile Memory Express (NVMe) device, a 3D crosspoint device, or other suitable storage device.

A SPI-NOR flash device may communicate using an SPI interface utilizing synchronous serial communication in a full duplex mode according to a master-slave architecture. A UFS device may utilize a high speed serial interface (e.g., an M-PHY interface as developed by the MIPI Alliance) that implements a full-duplex serial low-voltage differential signaling interface. An eMMC device may refer to a package comprising both flash memory and a flash memory controller integrated on the same silicon die. An NVMe device may be any suitable device conforming with one or more of the specifications available at www.nvmexpress.org/specifications/. In some embodiments, a 3D crosspoint device may comprise storage with a transistor-less stackable cross point architecture in which memory cells sit at the intersection of words lines and bit lines and are individually addressable and in which bit storage is based on a change in bulk resistance.

In some embodiments, one or more of the storage devices 106 may implement Replay Protected Memory Block (RPMB) technology. RPMB implements a common protocol and frame layout. Instead of accessing an RPMB partition via a standard block layer, the partition is accessed by a set of commands including: WRITE, READ, GET_WRITE_COUNTER, and thus suitable for use as secure storage. In some embodiments, OOB controller 102 may use RPMB to provision a known key on one or more of the storage devices 106 (or at the associated storage controllers 104) and query the devices for the key prior to sending a firmware module to the storage device 106.

A storage device 106 may be communicatively coupled to other components of computing system 100 via a storage controller 104. For example, storage controller 104A provides an interface for storage device 106A, storage controller 104B provides an interface for storage device 106B, storage controller 104C provides an interface for storage device 106C. A storage controller 104 may provide an interface between an interconnect 122 of the computing system 100 and one or more storage devices 106.

A storage controller 104 may include logic to receive requests (e.g., from CPU 114 or OOB controller 102), convert the requests into a format compatible with an associated storage device, cause the requests to be carried out by the storage device 106, and provide data associated with the requests to other components of the computing system (e.g., CPU 114 or other component). In various embodiments, storage controller 104 may also be operable to detect and/or correct errors encountered during memory operation.

In some embodiments, storage controller 104 may perform cryptographic functions, including encryption and/or decryption of data prior to sending the data to the storage device 106 for storage thereon and encrypting and/or decrypting data retrieved from the storage device before providing the data to another component of the computing system 100.

In a particular embodiment, a single storage controller 104 may be a storage controller that provides and interface for and manages storage operations for multiple different storage devices 106 (which may each be of the same type of storage or may be of different types) of computer system 100 (and thus may provide storage device controller functionality described herein to any of the storage devices to which it is coupled). In such an embodiment, multiple storage devices 106 of different types may be viewed by the OOB controller 102 as a single storage device and the OOB controller 102 may utilize the same command set to send requests to the aggregated storage controller to perform operations at each of the storage devices.

In various embodiments, the physical link between a storage controller 104 and its associated storage device 106 may be protected. For example, the data that is passed from the storage controller 104 to the storage device 106 may be encrypted. As another example, the data (whether encrypted or not) may be sent with a hash-based message authentication code (HMAC) or other suitable data to enable data integrity and authentication verification.

In other embodiments, the data passed to the storage device may be encrypted by another component or system (e.g., OOB controller 102 or cloud service 110) prior to being received at the storage controller 104 and the storage controller 104 passes the data to the storage device 106 in its encrypted state, decrypts the data before passing the data to the storage device 106, or decrypts the data and then encrypts the data prior to sending to the storage device 106. In some embodiments, the storage device 106 may decrypt the data before writing to the storage medium or may store the data in an encrypted state in the storage medium. In various embodiments, the storage device 106 may authenticate and/or integrity verify data received from the storage controller 104 prior to writing the data to the storage medium of the storage device 106.

In various embodiments, a storage device 106 may include multiple partitions. For example, in the embodiment depicted, storage device 106A includes a first BIOS partition 116A and a second BIOS partition 116B. In particular embodiments, an updated firmware module may be written to a first partition that is different from a second partition that stores a current version of the firmware module. In some embodiments, when an update is performed, the update is verified (e.g., during the next boot or other access to the updated firmware module) and if the update is determined to be operable, the updated firmware module is set as the current version of the firmware used by the computing system 100. The updated firmware module may be marked as the current version in any suitable manner by any suitable component (e.g., the storage device 106, the storage controller 104, or a register of the CPU 114).

In some embodiments, after an update is verified as operable, one or more other partitions may be updated to store the now verified firmware. Thus, multiple partitions may store the same version of a firmware module, so that if one partition is corrupted, the computing system 100 may switch to usage of the other partition. In various embodiments, different partitions may be kept at different versions to allow for firmware rollback. In various embodiments, the OOB controller 102 may specify which partition a firmware module is to be written to.

A determination of whether a firmware module is corrupt may be performed in any suitable manner. In one embodiment, a firmware module may be loaded in memory and a hash of the firmware module is computed. This hash may be compared against a hash stored in some other storage. If the hashes do not match, then a backup firmware module may be marked and used as the current version. For example, in such a case the address of the backup firmware module may be written from some other storage into a register. In another embodiment, loading of a firmware module may be initiated and a timer may be started. If the firmware can ring a bell (e.g., send a message) before the expiry of the timer, the firmware is verified as good. However, if the bell is not rung, the computing system may be reset and the firmware may be switched.

OOB controller 102 may manage the updating of firmware modules of the computing system 100. The OOB controller 102 may pull the firmware modules from the cloud service 110 or the cloud service 110 may push the firmware to the OOB controller 102. In a particular embodiment, once the OOB controller 102 receives the firmware (or the firmware is otherwise received at the computing system 100), the controller causes installation of the firmware on the appropriate storage device 106 (e.g., by communicating the firmware or a location of the firmware to the corresponding storage controller 104).

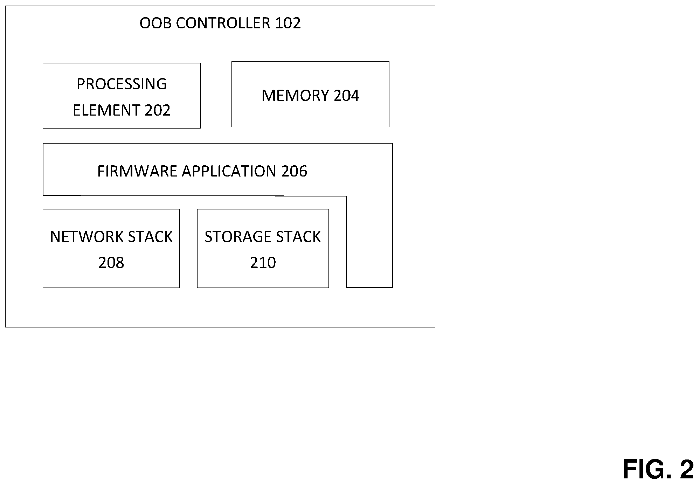

FIG. 2 illustrates OOB controller 102 in accordance with certain embodiments. In the embodiment depicted, OOB controller 102 includes processing element 202, memory 204, firmware application 206, network stack 208, and storage stack 210.

In various embodiments, the OOB controller 102 operates as an out-of-band asynchronous compute agent which is capable of interfacing with the various elements of computing system 100 with no or minimal disruption to processes executed by CPU 114. For example, OOB controller 102 may comprise a dedicated processing element 202 (e.g., a processor, microcontroller, or other logic) which provides the functionality of OOB controller 102 (e.g., by executing software instructions stored in memory 204 or by providing other functionality via circuitry), thus conserving processing cycles of CPU 114 for other operations.

In various embodiments, OOB controller 102 includes securely booted firmware with protections and anti-rollback enforced for persistent storage. For example, memory 204 may include a read only memory (ROM) or other secure memory comprising instructions that are executed by processing element 202 to perform, at least in part, the functionality of the OOB controller 102. In another example, the OOB controller 102 may also include a secure mechanism (e.g., fuses) to provide anti-replay functionality to protect against a denial-of-service (DoS) attacks.

In various embodiments, in addition to managing firmware updates in an out of band fashion, the OOB controller 102 may perform any suitable functions that do not utilize the CPU 114. In particular embodiments, the OOB controller 102 may be a converged security engine, manageability engine, or an offloaded services engine. In various embodiments, OOB controller may enable one or more of secure drive wiping, remote maintenance, telemetry data collection, and remote connection. In one example, OOB controller 102 may enable control of computing system 100, even when the CPU 114 is powered off or the operating system is nonresponsive. In some embodiments, OOB controller 102 may have a direct connection over interconnect 122 to one or more other components of the computing system, such as storage controllers 104 or network controller 108.

Firmware application 206 may provide the general firmware management functionality of the OOB controller 102 and may utilize the network stack 208 and the storage stack 210 during performance of its functions.

In one embodiment, OOB controller 102 may receive a push notification from cloud service 110 when an updated firmware module is available. In another embodiment, firmware application 206 may periodically poll cloud service 110 or other entity to determine whether a firmware update is available. Such an embodiment may be particularly suited for a computing environment where a firewall, proxy, demilitarized zone (DMZ), or network address translation is implemented, as incoming connections from the cloud service 110 may be blocked in such networks, but outgoing connections from the OOB controller 102 to the cloud service 110 may be allowed.

Firmware application 206 may coordinate with other components (e.g., CPU 114 or storage controllers 104) to ensure that the firmware to be updated is not accessed by such components during the update. In a particular embodiment, the firmware application 206 may host semaphores, where each semaphore is used in conjunction with access to a particular partition storing a firmware module.

The firmware application 206 may determine to cause one or more firmware modules to be downloaded to the computing system 100 responsive to any suitable event. For example, a download may be initiated responsive to a notification from the cloud service 110 that an updated firmware module that the computing system 100 already has is available. As another example, a download may be initiated responsive to a notification generated in response to a user requesting a particular firmware module. As another example, a download may be initiated responsive to a notification that a particular firmware module is inoperable or corrupted (e.g., a BIOS module may be requested if the BIOS does not boot).

The firmware application 206 may initiate download of one or more firmware modules in any suitable manner. In a particular embodiment, the firmware application 206 generates a message identifying the firmware module and sends that message to the cloud service. In some embodiments, the firmware application 206 may generate a message that doesn't identify a specific firmware module, but the message may indicate that the computing system 100 is ready to receive any firmware modules that are updated relative to the firmware modules stored by the computing system 100.

In one embodiment, a requested firmware module is transferred to the OOB controller 102 and buffered in a memory (e.g., memory 204 or other memory) of the OOB controller. In some embodiments, the entire firmware module may be stored in the memory of the OOB controller 102 and then sent to the relevant storage controller 104 in one or more segments. In other embodiments, the memory of the OOB controller stores a portion of the requested firmware module, the OOB controller transmits that portion to the relevant storage controller 104, and then the OOB controller may store a different portion of the requested firmware module over the portion that was transmitted to the storage controller 104. Thus, the memory of the OOB controller 102 may buffer a streaming of the firmware module from the cloud service 110 and may stream the firmware module to the storage controller. Such an embodiment may reduce the amount of memory utilized by the OOB controller 102. In various embodiments, the OOB controller 102 may perform verification operations (e.g., data integrity and authentication) on the firmware module (or segments thereof) received before providing the firmware module to the storage controller 104.

In some embodiments, the OOB controller 102 may request that a firmware module be transferred to the computing system via a remote direct memory access (RDMA) procedure. In various embodiments, any suitable RDMA technology (e.g., InfiniBand, internet Wide Area RDMA Protocol (iWarp), or RDMA over Converged Ethernet (RoCE)) may be utilized to transport the firmware module from the cloud service 110 to the network controller 108, which may then send the firmware module to the system memory 124. In various embodiments, OOB controller 102 may perform any suitable RDMA operations, such as allocate user virtual memory in the system memory 124 (e.g., via a malloc command), register the virtual memory with the network controller 108, initiate an RDMA connection with the cloud service 110 (e.g., via an rdma_connect message), post a receive message to receive the firmware module when the cloud service 110 posts a send message, send an rdma disconnect message to break the connection with the cloud service 110 upon transfer of the firmware module, and free the user virtual memory in the system memory 124 after the firmware module has been retrieved by the storage controller 104.

In some embodiments, the OOB controller 102 may create a queue pair comprising a send queue and a receive queue. The OOB controller 102 may post operations to such queues, e.g., by using a verbs application programming interface (API). Once a verb is completed, the network controller 108 may signal completion by writing a completion entry to a completion queue associated with the OOB controller's queue pair (though in some embodiments, verbs do not generate a completion entry, but completion is detected using other suitable methods).

Upon detecting that a firmware module has been sent via RDMA to the system memory 124, the OOB controller 102 may cause the firmware module to be communicated to the storage controller by sending the storage controller 104 information utilized by the storage controller 104 to retrieve the firmware module. For example, the OOB controller 102 may send the storage controller 104 a location (e.g., a physical memory address within system memory 124), a size of the firmware module, or other suitable identifying information.

In some embodiments, the OOB controller 102 may cause the firmware module to be streamed directly by the network controller 108 to the storage controller 104. In various embodiments, a verification mechanism may be set up by the OOB controller 102 before the streaming begins (e.g., by exchanging credentials with the cloud service 110 before initiating streaming). The OOB controller 102 may also provide credentials (e.g., a security token) to the storage controller 104 before streaming begins to allow verification by the storage controller 104.

In particular embodiments, the firmware application 206 may communicate with the CPU 114 over a notification channel. For example, such a channel may utilize an interrupt or a mailbox exposed by the OOB controller 102. In some embodiments, the notification channel is an unsecure channel and hence does not utilize encryption or integrity protection. The notification channel may be used to send notifications to control access to the partitions being written to during a firmware update. The notification channel may also be used by the firmware application 206 to notify the CPU that the firmware has been updated and the partition is usable again. In some embodiments, the notification channel may be utilized by the CPU to send a trigger to the OOB controller (e.g., responsive to a failure to boot BIOS or other error associated with a firmware module or responsive to a request from the CPU for a particular firmware module).

Network stack 208 may comprise an implementation (e.g., software implementation) of a computer networking protocol suite. Network stack 208 may implement a various layers of protocol modules, such as one or more of the layers defined by the Open Systems Interconnection (OSI) model. In particular embodiments, the network stack 208 is operable to establish a secure channel (e.g., a Transport Layer Security (TLS) or similar connection) with the cloud service 110 to initiate the transfer of firmware to the computing system 100 through the network controller 108.

Storage stack 210 may stream the data from the network to the appropriate region inside the storage medium. The storage stack may segment a firmware module, format the segments appropriately, and provide the segments for transmission to the storage controller 104. In various embodiments, firmware modules destined for different types of storage devices 106 are communicated by the OOB controller 102 over the interconnect 122 utilizing a common format (and the respective storage controllers then convert the data into a storage device specific format).

In various embodiments, the OOB controller 102 may have direct connections over the interconnect 122 (or other suitable interconnect(s)) with the network controller 108 and one or more storage controllers 104. In various embodiments, protected channels are set up between components of the computing system 100, e.g., between the OOB controller 102 and a storage controller 104, between the OOB controller 102 and a network controller 108, between the network controller 108 and system memory 124, between the system memory 124 and a storage controller 104, between the network controller 108 and a storage controller 104, etc. The protected channels may thwart against in-SoC snooping attacks. In addition, the protected channels may prevent remote debug controls that would allow a remote debugger to operate as a man-in-the-middle (MITM) during an attack.

In some embodiments, the protected channels may be set up in accordance with access control (e.g., Security Attributes of Initiator (SAI) or a master id/slave id scheme). In some embodiments, security attributes may be assigned to an initiator (e.g., a component that attempts to access a target resource) and used to determine the access rights (e.g., read, write, no access, etc.) of the initiator. In some embodiments, read and write access policy registers are employed for implementing policies. For example, access control for accessing objects (e.g., system memory 124) that are coupled to a memory fabric may be facilitated by a first set of read and write policy registers. Similarly, access control for accessing external targets such as IO devices (e.g., storage devices 106) may be facilitated via a second set of read and write policy registers. Additionally, a control policy register may be used to determine what entity or entities can configure the read and write policy registers.

A transaction initiated by an initiator to access a target resource may include security attributes defining access privileges associated with the initiator that are evaluated against an access policy defined for the target resource. In various embodiments, the security attributes include one or more of a role, device mode, and system mode. The security attributes accompanying the transaction may serve as an index to the policy register. Unlike source IDs, security attribute information does not get transformed at bridges, but rather persists until the point of policy enforcement.

The transaction may be allowed to proceed if the security attributes indicate that access to the target resource by the initiator is permitted by the access policy. Conversely, if an initiator does not have the proper security attributes (as identified via its security attribute information forwarded with its access messages), the transaction will be denied, and a corresponding message may be returned to the initiator.

Network controller 108 may be used for the communication of signaling and/or data between computing system 100 and one or more networks 112 and one or more computing systems (e.g., cloud service 110) coupled to the network 112. For example, network controller 108 may be used to send and receive network traffic such as data packets. In a particular embodiment, network controller 108 may enable communication between any suitable element of computing system 100 (e.g., OOB controller 102, a core of CPU 114, or a storage controller 104) and another device coupled to network 112 (e.g., elements of other computing systems of cloud service 110 or other remote nodes coupled to network 112 through one or more networks). In a particular embodiment, network controller 108 may include a WiFi controller, an Ethernet controller, a converged WiFi and Ethernet controller, or other suitable communication controller.

A network 112 may be any suitable network or combination of one or more networks operating using one or more suitable networking protocols. A network may represent a series of nodes, points, and interconnected communication paths for receiving and transmitting packets of information that propagate through a communication system. For example, a network may include one or more firewalls, routers, switches, security appliances, antivirus servers, or other useful network devices. A network offers communicative interfaces between sources and/or hosts, and may comprise any local area network (LAN), wireless local area network (WLAN), metropolitan area network (MAN), Intranet, Extranet, Internet, wide area network (WAN), virtual private network (VPN), cellular network, or any other appropriate architecture or system that facilitates communications in a network environment. A network can comprise any number of hardware or software elements coupled to (and in communication with) each other through a communications medium.

System memory 124 may store data that is used by CPU 114 to perform the functionality of computer system 100. For example, data associated with programs that are executed or files accessed by one or more processing cores of CPU 114 may be stored in system memory 124. Thus, system memory 124 may store data and/or sequences of instructions that are executed by the CPU 114. System memory 124 may be dedicated to CPU 114 or shared with other components of computer system 100.

System memory 124 may include volatile or non-volatile memory (such as any of the non-volatile memory described herein or other suitable non-volatile memory). Volatile memory is a storage medium that requires power to maintain the state of data stored by the medium. Examples of volatile memory may include various types of random access memory (RAM), such as dynamic random access memory (DRAM) or static random access memory (SRAM). One particular type of DRAM that may be used in system memory is synchronous dynamic random access memory (SDRAM). In particular embodiments, DRAM of system memory 124 complies with a standard promulgated by the Joint Electron Device Engineering Council (JEDEC), such as JESD79F for Double Data Rate (DDR) SDRAM, JESD79-2F for DDR2 SDRAM, JESD79-3F for DDR3 SDRAM, or JESD79-4A for DDR4 SDRAM (these standards are available at www.jedec.org). In some embodiments, system memory 124 comprises one or more memory modules, such as dual in-line memory modules (DIMMs). System memory 124 may comprise any suitable type of memory and is not limited to a particular speed or technology of memory in various embodiments.

Memory controller 126 includes logic (e.g., hardware and/or software) to control the flow of data going to and from the system memory 124. Memory controller 126 may include logic necessary to read from and write to system memory 124 and to cause refreshing of the values stored in system memory 124 (e.g., if these values are stored in volatile memory). During operation, memory controller 126 may select one or more addresses (e.g., row and/or column addresses) of the system memory 124 to read from or write to. Memory controller 126 may receive write requests from CPU 114 or an I/O controller (e.g., network controller 108) and may provide data specified in these requests to system memory 124 for storage therein. Memory controller 126 may also read data from system memory 124 and provide the read data to an I/O controller or the CPU 114.

Cloud service 110 may comprise any suitable computing system or group of computing systems operable to store firmware and to communicate the firmware to computing system 100. In some embodiments, cloud service 110 may notify OOB controller 102 when an updated version of firmware is available. In various embodiments, cloud service 110 may track versions of firmware installed on computing system 100 and may be operable to notify computing system 100 when an updated version of one or more firmware modules are available (either in response to a request from computing system 100 or by pushing a message to the computing system 100). In some embodiments, cloud service 110 is operable to connect to the OOB controller 102, network controller 108, or to a storage controller 104 to stream a firmware module to the OOB controller 102, network controller 108, or storage controller 104.

Various precautions may be taken to protect the firmware sent from the cloud service 110 to the computing system 100. For example, a virtual link between the network controller 108 and the cloud service 110 may be protected using storage encryption. In some embodiments, the OOB controller 102 and the cloud service 110 mutually authenticate each other before the computing system 100 accepts firmware from the cloud service 110. In a particular embodiment, the network stack 208 of the OOB controller 102 sets up a TLS session with the cloud service 110 to retrieve the firmware.

CPU 114 may include one or more processing cores or other processing elements. CPU 114 may also include one or more caches utilized by the processing cores as well as interconnect between the core(s) and cache(s).

In various embodiments, the CPU 114 may execute an operating system that is also able to update one or more portions of the firmware or the operating system that the OOB controller 102 is able to update. For example, the operating system may pull an update from cloud service 110 or other source, reboot (to allow access to a storage medium that will store the update), and update the firmware or operating system. Thus in some embodiments, firmware modules may be updated by the CPU 114 or the OOB controller 102.

CPU 114, OOB controller 102, the storage controller(s) 104, the network controller 108, and the memory controller 126 may be interconnected through one or more interconnect fabrics or links (e.g., 122). In one embodiment, interconnect 122 may comprise a ring interconnect or other bus through which the various components of the computing system 100 connect. In various embodiments, the interconnect fabric may utilize technologies such as Peripheral Component Interconnect Express (PCIe), Ethernet, OpenCAPI^{™}, Gen-Z^{™}, Ultra Path Interconnect (UPI), Universal Serial Bus, (USB), Cache Coherent Interconnect for Accelerators (CCIX^{™}), Advanced Micro Device^{™}'s (AMD^{™}) Infinity^{™}, Common Communication Interface (CCI), or Qualcomm^{™}'s Centriq^{™} interconnect, among others.

In a particular embodiment, the storage controller(s) 104 are implemented on the same integrated circuit package as the CPU 114, the OOB controller 102, and the memory controller 126. In other embodiments, one or more of the storage controllers 104 may be located on a circuit board comprising an interface for an integrated circuit package comprising the CPU 114, the OOB controller 102, and the memory controller 126. In various embodiments, the storage devices may either be located on the integrated circuit package, on a different integrated circuit package coupled to the package having the CPU (e.g., via a circuit board), or in another suitable device. In various embodiments, any one or more of the components illustrated may be located on chip (i.e., on the same chip as the CPU 114) or off chip.

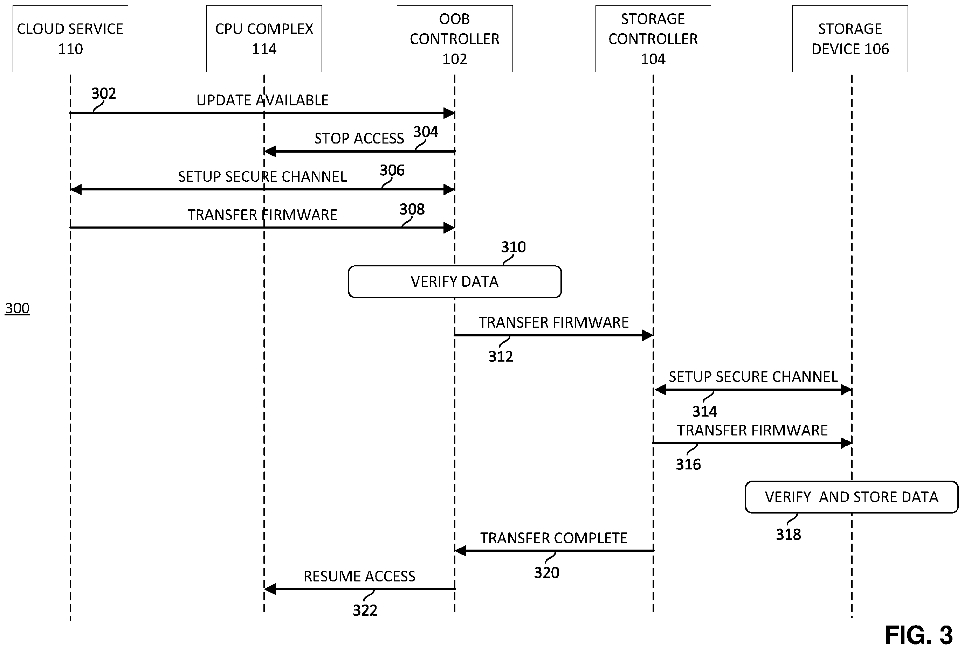

FIG. 3 illustrates a flow 300 for updating computing system firmware in accordance with certain embodiments. At 302, cloud service 110 notifies OOB controller 102 that a firmware update is available. In a particular embodiment, the cloud service 110 may push this notification to the OOB controller 102 when the cloud service 110 is provisioned with updated firmware. In another embodiments, the OOB controller 102 may poll the cloud service periodically (directly or through another component). The OOB controller may poll the cloud service with respect to a particular firmware module or may poll the cloud service 110 generally as to whether any of a plurality of firmware modules have been updated or are available. Upon being polled, the cloud service 110 may determine whether any firmware updates are available and send the update available notification 302 to OOB controller 102 if an update is available.

At 304, the OOB controller 102 sends a request to the CPU to stop access of the firmware to be updated. In some embodiments, the OOB controller 102 may wait for a confirmation from the CPU 114 before proceeding or may resume the flow after a predetermined period of time has passed since the OOB controller 102 sent the request.

In other embodiments, the OOB controller 102 may send the request and then continue with the flow but may wait to transfer firmware to the storage controller 104 until receiving confirmation from CPU 114 that the firmware is not being accessed. In other embodiments, the request may be sent to the CPU 114 immediately before the OOB controller 102 begins transfer of the firmware module to the storage controller 104.

At 306, the OOB controller 102 may setup a secure channel with the cloud service. In some embodiments, this setup may include the exchange of one or more cryptographic keys used to encrypt the firmware module or provide authentication and data integrity verification capability for the data sent from the cloud service 110 to the OOB controller 102. In a particular embodiment, a TLS session is setup at 306.

At 308, the firmware module is transferred from the cloud service 110 to the OOB controller 102. At 310, OOB controller 102 verifies the data received from the cloud service 110. In various embodiments, verification may include confirming the origin and integrity of the data. Once the data is verified, it is sent to the appropriate storage controller 104 at 312.

In one embodiment, the OOB controller 102 may decrypt the data of the firmware module before sending the data to the storage controller 104. In another embodiment, the OOB controller 102 may decrypt the data of the firmware module and then encrypt the data before transmission to the storage controller 104 (e.g., using a different key than was used to protect the data between the cloud service 110 and the OOB controller 102). In yet another embodiment, the OOB controller 102 may pass the encrypted data to the storage controller 104 without decrypting the data.

In some embodiments, the entire firmware module may be received at OOB controller 102 before any data of the firmware module is sent from OOB controller 102 to storage controller 104. In other embodiments, once one or more segments (e.g., packets or other grouping of data) have been received at the OOB controller 102, but before the entire firmware module has been received, the OOB controller 102 may begin transmitting segments of the firmware module to the storage controller 104. Such an embodiment may reduce the amount of buffer storage utilized by the OOB controller 102 as well as result in faster transmission of the firmware module to the storage device 106.

At 314, the storage controller 104 may set up a secure channel with an associated storage device 106. The secure channel may enable the storage controller 104 to encrypt the data of the firmware module or otherwise protect the data (e.g., enabling authentication and data integrity verification). In a particular embodiment, the data is signed by an HMAC.

At 316, the firmware module is transferred from the storage controller 104 to the storage device 106 for storage thereon. At 318, the data is verified and then stored by the storage device 106. The verification may comprise verification of the data integrity and the authentication of a message, e.g., via a HMAC sent with the data or via any other suitable procedure. The firmware module may be stored by the storage device 106 in an encrypted state or an unencrypted state. In some embodiments, the firmware module may be stored on a partition or in a location that is different from a partition or location that stores a previous version of the firmware. In other embodiments, the firmware module overwrites a previous version of the firmware at the same location at which the previous version of the firmware was stored.

Once the firmware module has been sent to the storage device 106 (or after receiving an indication from the storage device that the firmware module has been verified or stored), the storage controller may send a notification to the OOB controller 102 that the transfer is complete at 320. Upon receiving this notification, the OOB controller 102 notifies CPU 114 at 322 that it may resume access to the firmware that was just updated.

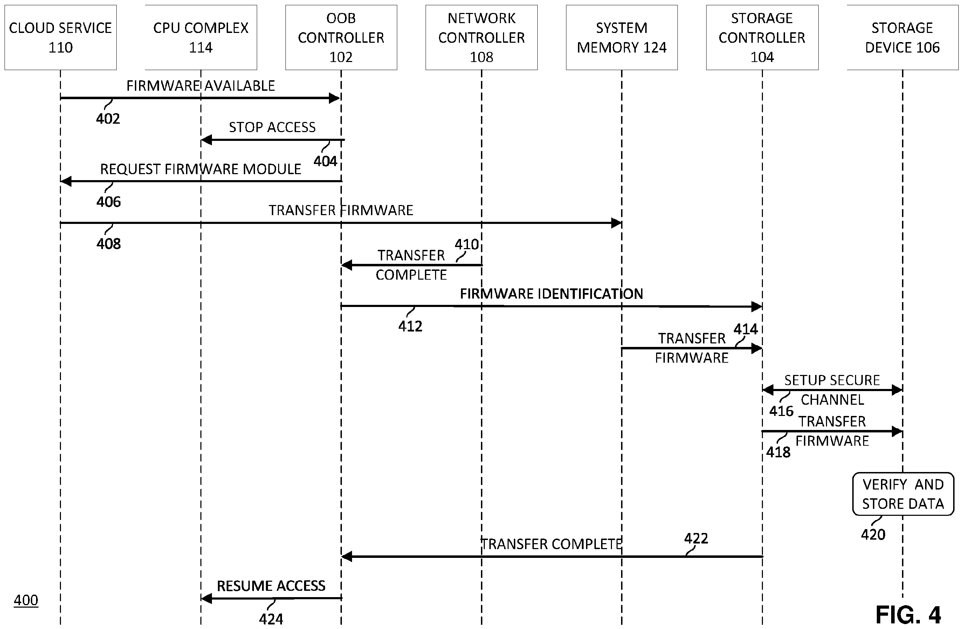

FIG. 4 illustrates a second flow 400 for updating computing system firmware in accordance with certain embodiments. In various embodiments, the communications or operations depicted in flow 400 may have any of the characteristics of similar communications or operations of flow 300, any communication or operations of flow 400 may be used in flow 300, or any communications or operations of flow 300 may be used in flow 400.

At 402, cloud service 110 notifies OOB controller 102 that a firmware module is available. At 404, the OOB controller 102 sends a request to the CPU 114 to stop access of the firmware to be updated.

At 406, the OOB controller 102 sends a request for the firmware module to the cloud service 110. At 408, the firmware module is transferred to system memory 124 via a remote direct memory access (RDMA) procedure. In various embodiments, any suitable RDMA technology may be utilized to transport the firmware module from the cloud service 110 to the network controller 108, which then sends the firmware module to the system memory 124.

At 410, the network controller 108 provides an indication that the transfer is complete to OOB controller 102. In a particular embodiment, the network controller 108 may write a completion entry to a completion queue to signal the completion of the transfer. In another embodiment, the network controller 108 may send a message with the indication to the OOB controller 102 over interconnect 122. Other embodiments may include other mechanisms for notifying the OOB controller 102 that the transfer is complete.

At 412, the OOB controller 102 sends an identification of the firmware module to the storage controller 104. The identification comprises information allowing the storage controller 104 to retrieve the firmware module from the system memory 124. For example, the identification may include an address of system memory 124 that marks the beginning of the firmware module and a size of the firmware module.

At 414, the firmware module is transferred from the system memory 124 to the storage controller 104. The transfer may be responsive to one or more read requests sent from the storage controller 104 to the system memory 124 based on the firmware identification sent to the storage controller 104 by the OOB controller 102. In various embodiments, a secure channel may be established between the storage controller 104 and system memory 124 prior to the transfer of the firmware module.

At 416, the storage controller 104 may set up a secure channel with an associated storage device 106. The secure channel may enable the storage controller 104 to encrypt the data of the firmware module or otherwise protect the data. In a particular embodiment, the data is signed by an HMAC. At 418, the firmware is transferred from the storage controller 104 to the storage device 106 for storage thereon. At 420, the data is verified and then stored by the storage device 106.

Once the firmware module has been sent to the storage device 106 (or after receiving an indication from the storage device that the firmware module has been verified or stored), the storage controller may send a notification at 422 to the OOB controller 102 that the transfer is complete at 320. Upon receiving this notification, the OOB controller 102 notifies CPU 114 at 424 that it may resume access to the firmware that was just updated.

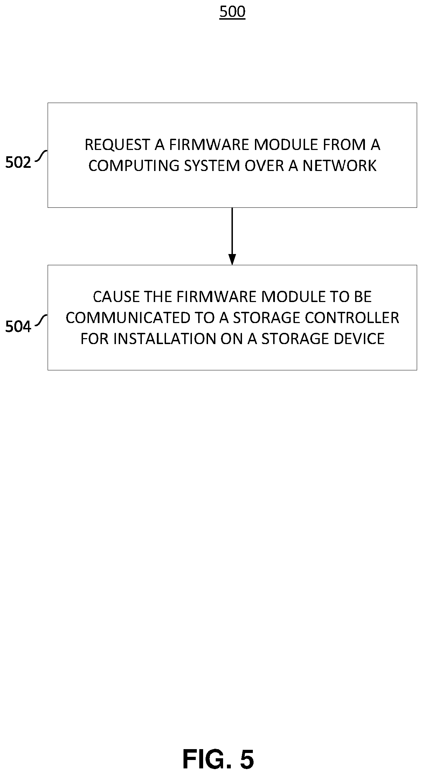

FIG. 5 illustrates a third flow 500 for updating computing system firmware in accordance with certain embodiments. The flow may be performed by any suitable entity of computing system 100, such as OOB controller 102.

At 502, a firmware module is requested from a computing system (e.g., a computing system of cloud service 110) over a network (e.g., 112). At 504, the firmware module is caused to be communicated to a storage controller (e.g., 104) for installation on a storage device (e.g., 106).

The flows described in FIGs. 3-5 are merely representative of operations or communications that may occur in particular embodiments. In other embodiments, additional operations or communications may be performed in the flows. Various embodiments of the present disclosure contemplate any suitable signaling mechanisms for accomplishing the functions described herein. Some of the operations illustrated in FIGs. 3-5 may be repeated, combined, modified, or deleted where appropriate. Additionally, operations may be performed in any suitable order without departing from the scope of particular embodiments.

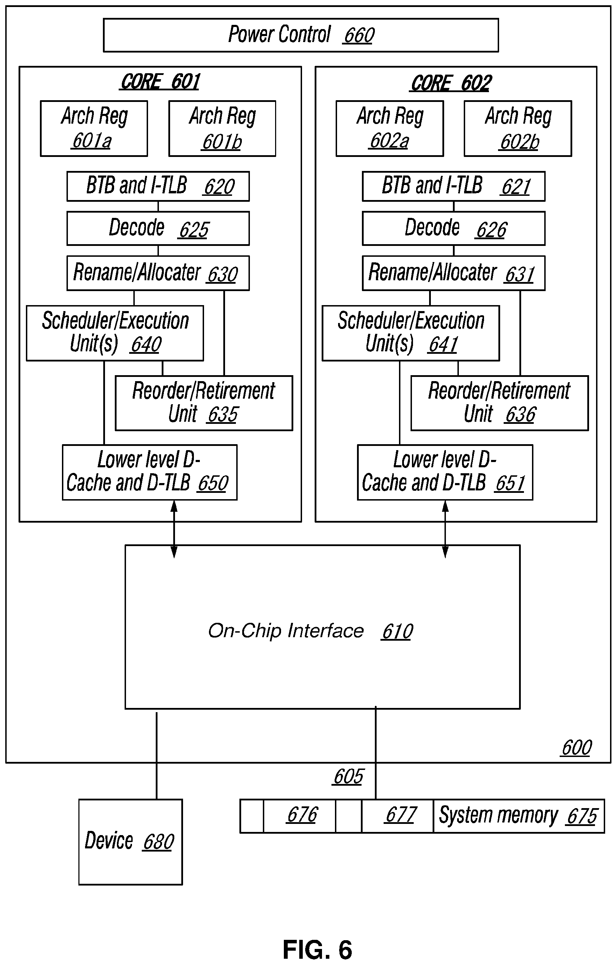

FIGs. 6-7 illustrate example environments in which various aspects of the present disclosure may operate or various components that may be used to perform operations described herein. For example, CPU 114 may include one or more cores 601 or 602 of processor 600, or other suitable combination of circuitry (which in some cases may include a computer readable medium with instructions for execution of various operations described herein). As another example, computing system 100 (or a portion thereof) may be implemented by SoC 700.

FIG. 6 illustrates a computing system including a multicore processor in accordance with certain embodiments. Processor 600 includes any processor or processing device, such as a microprocessor, an embedded processor, a digital signal processor (DSP), a network processor, a handheld processor, an application processor, a co-processor, a system on a chip (SOC), or other device to execute code. Processor 600, in one embodiment, includes at least two cores-core 601 and 602, which may include asymmetric cores or symmetric cores (the illustrated embodiment). However, processor 600 may include any number of processing elements that may be symmetric or asymmetric.

In one embodiment, a processing element refers to hardware or logic to support a software thread. Examples of hardware processing elements include: a thread unit, a thread slot, a thread, a process unit, a context, a context unit, a logical processor, a hardware thread, a core, and/or any other element, which is capable of holding a state for a processor, such as an execution state or architectural state. In other words, a processing element, in one embodiment, refers to any hardware capable of being independently associated with code, such as a software thread, operating system, application, or other code. A physical processor (or processor socket) typically refers to an integrated circuit, which potentially includes any number of other processing elements, such as cores or hardware threads.

A core often refers to logic located on an integrated circuit capable of maintaining an independent architectural state, wherein each independently maintained architectural state is associated with at least some dedicated execution resources. In contrast to cores, a hardware thread typically refers to any logic located on an integrated circuit capable of maintaining an independent architectural state, wherein the independently maintained architectural states share access to execution resources. As can be seen, when certain resources are shared and others are dedicated to an architectural state, the line between the nomenclature of a hardware thread and core overlaps. Yet often, a core and a hardware thread are viewed by an operating system as individual logical processors, where the operating system is able to individually schedule operations on each logical processor.

Physical processor 600, as illustrated in FIG. 6, includes two cores-core 601 and 602. Here, core 601 and 602 are considered symmetric cores, i.e. cores with the same configurations, functional units, and/or logic. In another embodiment, core 601 includes an out-of-order processor core, while core 602 includes an in-order processor core. However, cores 601 and 602 may be individually selected from any type of core, such as a native core, a software managed core, a core adapted to execute a native Instruction Set Architecture (ISA), a core adapted to execute a translated ISA, a co-designed core, or other known core. In a heterogeneous core environment (i.e. asymmetric cores), some form of translation, such as binary translation, may be utilized to schedule or execute code on one or both cores. Yet to further the discussion, the functional units illustrated in core 601 are described in further detail below, as the units in core 602 operate in a similar manner in the depicted embodiment.

As depicted, core 601 includes two hardware threads 601a and 601b, which may also be referred to as hardware thread slots 601a and 601b. Therefore, software entities, such as an operating system, in one embodiment potentially view processor 600 as four separate processors, i.e., four logical processors or processing elements capable of executing four software threads concurrently. As alluded to above, a first thread is associated with architecture state registers 601a, a second thread is associated with architecture state registers 601b, a third thread may be associated with architecture state registers 602a, and a fourth thread may be associated with architecture state registers 602b. Here, each of the architecture state registers (601a, 601b, 602a, and 602b) may be referred to as processing elements, thread slots, or thread units, as described above. As illustrated, architecture state registers 601a are replicated in architecture state registers 601b, so individual architecture states/contexts are capable of being stored for logical processor 601a and logical processor 601b. In core 601, other smaller resources, such as instruction pointers and renaming logic in allocator and renamer block 630 may also be replicated for threads 601a and 601b. Some resources, such as re-order buffers in reorder/retirement unit 635, instruction-translation buffer (ITLB) 620, load/store buffers, and queues may be shared through partitioning. Other resources, such as general purpose internal registers, page-table base register(s), low-level data-cache and data-TLB 615, execution unit(s) 640, and portions of out-of-order unit 635 are potentially fully shared. In some embodiments, separate ITLB 621, allocator and renamer block 631, reorder/retirement unit 636, schedule/execution unit(s) 641, and D-TLB 651 may be included in core 602.

Processor 600 often includes other resources, which may be fully shared, shared through partitioning, or dedicated by/to processing elements. In FIG. 6, an embodiment of a purely exemplary processor with illustrative logical units/resources of a processor is illustrated. Note that a processor may include, or omit, any of these functional units, as well as include any other known functional units, logic, or firmware not depicted. As illustrated, core 601 includes a simplified, representative out-of-order (OOO) processor core. But an in-order processor may be utilized in different embodiments. The OOO core includes a branch target buffer 620 to predict branches to be executed/taken and an I-TLB 620 to store address translation entries for instructions.

Core 601 further includes decode module 625 coupled to fetch unit 620 to decode fetched elements. Fetch logic, in one embodiment, includes individual sequencers associated with thread slots 601a, 601b, respectively. Usually core 601 is associated with a first ISA, which defines/specifies instructions executable on processor 600. Often machine code instructions that are part of the first ISA include a portion of the instruction (referred to as an opcode), which references/specifies an instruction or operation to be performed. Decode logic 625 includes circuitry that recognizes these instructions from their opcodes and passes the decoded instructions on in the pipeline for processing as defined by the first ISA. For example, as discussed in more detail below decoders 625, in one embodiment, include logic designed or adapted to recognize specific instructions, such as transactional instructions. As a result of the recognition by decoders 625, the architecture of core 601 takes specific, predefined actions to perform tasks associated with the appropriate instruction. It is important to note that any of the tasks, blocks, operations, and methods described herein may be performed in response to a single or multiple instructions; some of which may be new or old instructions. Note decoders 626, in one embodiment, recognize the same ISA (or a subset thereof). Alternatively, in a heterogeneous core environment, decoders 626 recognize a second ISA (either a subset of the first ISA or a distinct ISA).

In one example, allocator and renamer block 630 includes an allocator to reserve resources, such as register files to store instruction processing results. However, threads 601a and 601b are potentially capable of out-of-order execution, where allocator and renamer block 630 also reserves other resources, such as reorder buffers to track instruction results. Unit 630 may also include a register renamer to rename program/instruction reference registers to other registers internal to processor 600. Reorder/retirement unit 635 includes components, such as the reorder buffers mentioned above, load buffers, and store buffers, to support out-of-order execution and later in-order retirement of instructions executed out-of-order.

Scheduler and execution unit(s) block 640, in one embodiment, includes a scheduler unit to schedule instructions/operation on execution units. For example, a floating point instruction is scheduled on a port of an execution unit that has an available floating point execution unit. Register files associated with the execution units are also included to store information instruction processing results. Exemplary execution units include a floating point execution unit, an integer execution unit, a jump execution unit, a load execution unit, a store execution unit, and other known execution units.

Lower level data cache and data translation buffer (D-TLB) 650 are coupled to execution unit(s) 640. The data cache is to store recently used/operated on elements, such as data operands, which are potentially held in memory coherency states. The D-TLB is to store recent virtual/linear to physical address translations. As a specific example, a processor may include a page table structure to break physical memory into a plurality of virtual pages.

Here, cores 601 and 602 share access to higher-level or further-out cache, such as a second level cache associated with on-chip interface 610. Note that higher-level or further-out refers to cache levels increasing or getting further way from the execution unit(s). In one embodiment, higher-level cache is a last-level data cache-last cache in the memory hierarchy on processor 600-such as a second or third level data cache. However, higher level cache is not so limited, as it may be associated with or include an instruction cache. A trace cache-a type of instruction cache-instead may be coupled after decoder 625 to store recently decoded traces. Here, an instruction potentially refers to a macro-instruction (i.e. a general instruction recognized by the decoders), which may decode into a number of micro-instructions (microoperations).

In the depicted configuration, processor 600 also includes on-chip interface module 610 and power control module 660. Historically, a memory controller, which is described in more detail below, has been included in a computing system external to processor 600. In this scenario, on-chip interface 610 is to communicate with devices external to processor 600, such as system memory 675, a chipset (often including a memory controller hub to connect to memory 675 and an I/O controller hub to connect peripheral devices), a memory controller hub, a northbridge, or other integrated circuit. And in this scenario, bus 605 may include any known interconnect, such as a multi-drop bus, a point-to-point interconnect, a serial interconnect, a parallel bus, a coherent (e.g. cache coherent) bus, a layered protocol architecture, a differential bus, and a Gunning transceiver logic (GTL) bus.

Memory 675 may be dedicated to processor 600 or shared with other devices in a system. Common examples of types of memory 675 include DRAM, SRAM, non-volatile memory (NV memory), and other known storage devices. Note that device 680 may include a graphic accelerator, processor or card coupled to a memory controller hub, data storage coupled to an I/O controller hub, a wireless transceiver, a flash device, an audio controller, a network controller, or other known device.

Recently however, as more logic and devices are being integrated on a single die, such as SOC, each of these devices may be incorporated on processor 600. For example, in one embodiment, a memory controller hub is on the same package and/or die with processor 600. Here, a portion of the core (an on-core portion) 610 includes one or more controller(s) for interfacing with other devices such as memory 675 or a graphics device 680. The configuration including an interconnect and controllers for interfacing with such devices is often referred to as an on-core (or un-core) configuration. As an example, on-chip interface 610 includes a ring interconnect for on-chip communication and a high-speed serial point-to-point link 605 for offchip communication. Yet, in the SOC environment, even more devices, such as the network interface, co-processors, memory 675, graphics processor 680, and any other known computer devices/interface may be integrated on a single die or integrated circuit to provide small form factor with high functionality and low power consumption.

In one embodiment, processor 600 is capable of executing a compiler, optimization, and/or translator code 677 to compile, translate, and/or optimize application code 676 to support the apparatus and methods described herein or to interface therewith. A compiler often includes a program or set of programs to translate source text/code into target text/code. Usually, compilation of program/application code with a compiler is done in multiple phases and passes to transform hi-level programming language code into low-level machine or assembly language code. Yet, single pass compilers may still be utilized for simple compilation. A compiler may utilize any known compilation techniques and perform any known compiler operations, such as lexical analysis, preprocessing, parsing, semantic analysis, code generation, code transformation, and code optimization.

Larger compilers often include multiple phases, but most often these phases are included within two general phases: (1) a front-end, i.e. generally where syntactic processing, semantic processing, and some transformation/optimization may take place, and (2) a back-end, i.e. generally where analysis, transformations, optimizations, and code generation takes place. Some compilers refer to a middle, which illustrates the blurring of delineation between a front-end and back end of a compiler. As a result, reference to insertion, association, generation, or other operation of a compiler may take place in any of the aforementioned phases or passes, as well as any other known phases or passes of a compiler. As an illustrative example, a compiler potentially inserts operations, calls, functions, etc. in one or more phases of compilation, such as insertion of calls/operations in a front-end phase of compilation and then transformation of the calls/operations into lower-level code during a transformation phase. Note that during dynamic compilation, compiler code or dynamic optimization code may insert such operations/calls, as well as optimize the code for execution during runtime. As a specific illustrative example, binary code (already compiled code) may be dynamically optimized during runtime. Here, the program code may include the dynamic optimization code, the binary code, or a combination thereof.

Similar to a compiler, a translator, such as a binary translator, translates code either statically or dynamically to optimize and/or translate code. Therefore, reference to execution of code, application code, program code, or other software environment may refer to: (1) execution of a compiler program(s), optimization code optimizer, or translator either dynamically or statically, to compile program code, to maintain software structures, to perform other operations, to optimize code, or to translate code; (2) execution of main program code including operations/calls, such as application code that has been optimized/compiled; (3) execution of other program code, such as libraries, associated with the main program code to maintain software structures, to perform other software related operations, or to optimize code; or (4) a combination thereof.

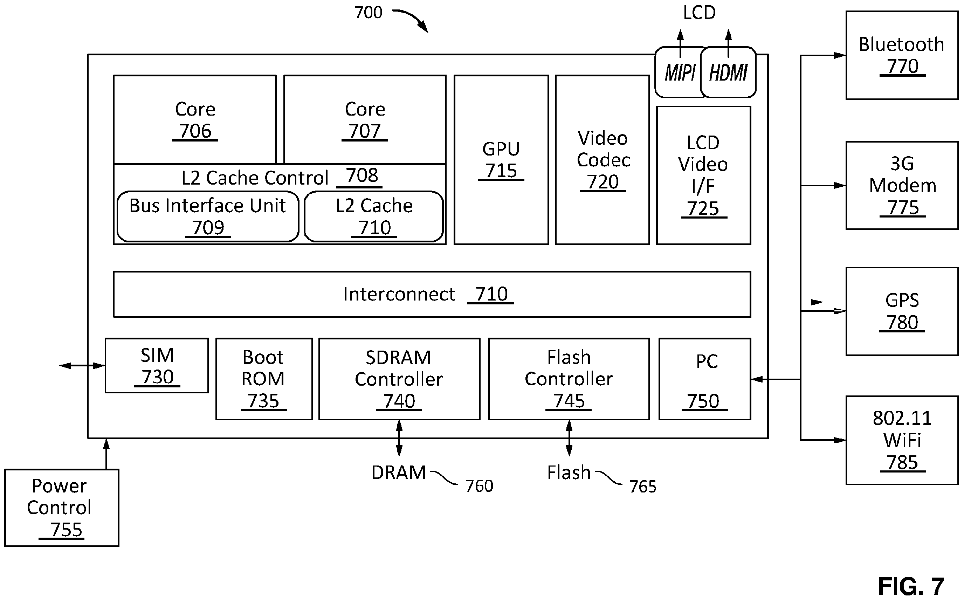

FIG. 7 illustrates an SoC 700 in accordance with certain embodiments. In this figure, an embodiment of a system on-chip (SOC) design in accordance with the disclosures is depicted. As a specific illustrative example, SOC 700 is included in user equipment (UE) or other computing system. In one embodiment, UE refers to any device to be used by an end-user to communicate, such as a hand-held phone, smartphone, tablet, ultra-thin notebook, notebook with broadband adapter, or any other similar communication device. Often a UE connects to a base station or node, which potentially corresponds in nature to a mobile station (MS) in a GSM network.

Here, SOC 700 includes 2 cores-706 and 707. Cores 706 and 707 may conform to an Instruction Set Architecture, such as an Intel^{®} Architecture Core^{™}-based processor, an Advanced Micro Devices, Inc. (AMD) processor, a MIPS-based processor, an ARMbased processor design, or a customer thereof, as well as their licensees or adopters. Cores 706 and 707 are coupled to cache control 708 that is associated with bus interface unit 709 and L2 cache 710 to communicate with other parts of system 700. Interconnect 710 includes an on-chip interconnect, such as an IOSF, AMBA, or other interconnect discussed above, which potentially implements one or more aspects of the described disclosure.

Interface 710 provides communication channels to the other components, such as a Subscriber Identity Module (SIM) 730 to interface with a SIM card, a boot ROM 735 to hold boot code for execution by cores 706 and 707 to initialize and boot SOC 700, a SDRAM controller 740 to interface with external memory (e.g. DRAM 760), a flash controller 745 to interface with non-volatile memory (e.g. Flash 765), a peripheral control 750 (e.g. Serial Peripheral Interface) to interface with peripherals, video codecs 720 and video interface 725 to display and receive input (e.g. touch enabled input), GPU 715 to perform graphics related computations, etc. Any of these interfaces may incorporate aspects of the disclosure described herein.

In addition, the system illustrates peripherals for communication, such as a Bluetooth module 770, 3G modem 775, GPS 780, and WiFi 785. Note as stated above, a UE includes a radio for communication. As a result, these peripheral communication modules are not all required. However, in a UE some form a radio for external communication is to be included. The system also illustrates a power control module 755.

A design may go through various stages, from creation to simulation to fabrication. Data representing a design may represent the design in a number of manners. First, as is useful in simulations, the hardware may be represented using a hardware description language (HDL) or another functional description language. Additionally, a circuit level model with logic and/or transistor gates may be produced at some stages of the design process. Furthermore, most designs, at some stage, reach a level of data representing the physical placement of various devices in the hardware model. In the case where conventional semiconductor fabrication techniques are used, the data representing the hardware model may be the data specifying the presence or absence of various features on different mask layers for masks used to produce the integrated circuit. In some implementations, such data may be stored in a database file format such as Graphic Data System II (GDS II), Open Artwork System Interchange Standard (OASIS), or similar format.

In some implementations, software based hardware models, and HDL and other functional description language objects can include register transfer language (RTL) files, among other examples. Such objects can be machine-parsable such that a design tool can accept the HDL object (or model), parse the HDL object for attributes of the described hardware, and determine a physical circuit and/or on-chip layout from the object. The output of the design tool can be used to manufacture the physical device. For instance, a design tool can determine configurations of various hardware and/or firmware elements from the HDL object, such as bus widths, registers (including sizes and types), memory blocks, physical link paths, fabric topologies, among other attributes that would be implemented in order to realize the system modeled in the HDL object. Design tools can include tools for determining the topology and fabric configurations of system on chip (SoC) and other hardware device. In some instances, the HDL object can be used as the basis for developing models and design files that can be used by manufacturing equipment to manufacture the described hardware. Indeed, an HDL object itself can be provided as an input to manufacturing system software to cause the described hardware.

In any representation of the design, the data may be stored in any form of a machine readable medium. A memory or a magnetic or optical storage such as a disc may be the machine readable medium to store information transmitted via optical or electrical wave modulated or otherwise generated to transmit such information. When an electrical carrier wave indicating or carrying the code or design is transmitted, to the extent that copying, buffering, or re-transmission of the electrical signal is performed, a new copy is made. Thus, a communication provider or a network provider may store on a tangible, machine-readable medium, at least temporarily, an article, such as information encoded into a carrier wave, embodying techniques of embodiments of the present disclosure.

In general, "servers," "clients," "computing systems," "platforms", "cloud services", and "systems" generally, etc. discussed herein can include electronic computing devices operable to receive, transmit, process, store, or manage data and information associated with an autonomous driving environment. As used in this document, the term "computer," "processor," "processor device," "processing element", or "processing device" is intended to encompass any suitable processing apparatus, including central processing units (CPUs), graphical processing units (GPUs), application specific integrated circuits (ASICs), field programmable gate arrays (FPGAs), digital signal processors (DSPs), tensor processors and other matrix arithmetic processors, among other examples. For example, elements shown as single devices within the environment may be implemented using a plurality of computing devices and processors, such as server pools including multiple server computers. Further, any, all, or some of the computing devices may be adapted to execute any operating system, including Linux, UNIX, Microsoft Windows, Apple OS, Apple iOS, Google Android, Windows Server, etc., as well as virtual machines adapted to virtualize execution of a particular operating system, including customized and proprietary operating systems.

Any of the flows, methods, processes (or portions thereof) or functionality of any of the various components described herein or illustrated in the FIGs. may be performed by any suitable computing logic, such as one or more modules, engines, blocks, units, models, systems, or other suitable computing logic. Reference herein to a "module", "engine", "block", "unit", "model", "system" or "logic" may refer to hardware, firmware, software and/or combinations of each to perform one or more functions. As an example, a module, engine, block, unit, model, system, or logic may include one or more hardware components, such as a micro-controller or processor, associated with a non-transitory medium to store code adapted to be executed by the micro-controller or processor. Therefore, reference to a module, engine, block, unit, model, system, or logic, in one embodiment, may refer to hardware, which is specifically configured to recognize and/or execute the code to be held on a non-transitory medium. Furthermore, in another embodiment, use of module, engine, block, unit, model, system, or logic refers to the non-transitory medium including the code, which is specifically adapted to be executed by the microcontroller or processor to perform predetermined operations. And as can be inferred, in yet another embodiment, a module, engine, block, unit, model, system, or logic may refer to the combination of the hardware and the non-transitory medium. In various embodiments, a module, engine, block, unit, model, system, or logic may include a microprocessor or other processing element operable to execute software instructions, discrete logic such as an application specific integrated circuit (ASIC), a programmed logic device such as a field programmable gate array (FPGA), a memory device containing instructions, combinations of logic devices (e.g., as would be found on a printed circuit board), or other suitable hardware and/or software. A module, engine, block, unit, model, system, or logic may include one or more gates or other circuit components, which may be implemented by, e.g., transistors. In some embodiments, a module, engine, block, unit, model, system, or logic may be fully embodied as software. Software may be embodied as a software package, code, instructions, instruction sets and/or data recorded on non-transitory computer readable storage medium. Firmware may be embodied as code, instructions or instruction sets and/or data that are hard-coded (e.g., nonvolatile) in memory devices. Furthermore, logic boundaries that are illustrated as separate commonly vary and potentially overlap. For example, a first and second module (or multiple engines, blocks, units, models, systems, or logics) may share hardware, software, firmware, or a combination thereof, while potentially retaining some independent hardware, software, or firmware.

The embodiments of methods, hardware, software, firmware or code set forth above may be implemented via instructions or code stored on a machine-accessible, machine readable, computer accessible, or computer readable medium which are executable by a processing element. A machine-accessible/readable medium includes any mechanism that provides (i.e., stores and/or transmits) information in a form readable by a machine, such as a computer or electronic system. For example, a non-transitory machine-accessible medium includes random-access memory (RAM), such as static RAM (SRAM) or dynamic RAM (DRAM); ROM; magnetic or optical storage medium; flash memory devices; electrical storage devices; optical storage devices; acoustical storage devices; other form of storage devices for holding information received from transitory (propagated) signals (e.g., carrier waves, infrared signals, digital signals); etc., which are to be distinguished from the non-transitory mediums that may receive information there from.

Instructions used to program logic to perform embodiments of the disclosure may be stored within a memory in the system, such as DRAM, cache, flash memory, or other storage. Furthermore, the instructions can be distributed via a network or by way of other computer readable media. Thus a machine-readable medium may include any mechanism for storing or transmitting information in a form readable by a machine (e.g., a computer), but is not limited to, floppy diskettes, optical disks, Compact Disc, Read-Only Memory (CD-ROMs), and magneto-optical disks, Read-Only Memory (ROMs), Random Access Memory (RAM), Erasable Programmable Read-Only Memory (EPROM), Electrically Erasable Programmable Read-Only Memory (EEPROM), magnetic or optical cards, flash memory, or a tangible, machine-readable storage used in the transmission of information over the Internet via electrical, optical, acoustical or other forms of propagated signals (e.g., carrier waves, infrared signals, digital signals, etc.). Accordingly, the computer-readable medium includes any type of tangible machine-readable medium suitable for storing or transmitting electronic instructions or information in a form readable by a machine (e.g., a computer).

Reference throughout this specification to "one embodiment" or "an embodiment" means that a particular feature, structure, or characteristic described in connection with the embodiment is included in at least one embodiment of the present disclosure. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

In the foregoing specification, a detailed description has been given with reference to specific exemplary embodiments. It will, however, be evident that various modifications and changes may be made thereto without departing from the scope of the disclosure as set forth in the appended claims. The specification and drawings are, accordingly, to be regarded in an illustrative sense rather than a restrictive sense. Furthermore, the foregoing use of embodiment and other exemplarily language does not necessarily refer to the same embodiment or the same example, but may refer to different and distinct embodiments, as well as potentially the same embodiment.

While some of the systems and solutions described and illustrated herein have been described as containing or being associated with a plurality of elements, not all elements explicitly illustrated or described may be utilized in each alternative implementation of the present disclosure. Additionally, one or more of the elements described herein may be located external to a system, while in other instances, certain elements may be included within or as a portion of one or more of the other described elements, as well as other elements not described in the illustrated implementation. Further, certain elements may be combined with other components, as well as used for alternative or additional purposes in addition to those purposes described herein.

## Claims

1. A method comprising:
requesting, by a controller (102) that operates in an out of band fashion with respect to a central processing unit (114), a firmware module (120) from a computing system (100) over a network (110,112); and
instructing, by the controller (102), the central processing unit (114) to cease access to a previous version of the firmware module (120) prior to causing the firmware module (120) to be communicated to a storage controller (104) for installation on a storage device (106), wherein the controller (102) is coupled to the central processing unit (114) and the storage controller (104); causing the firmware module (120) to be communicated to the storage controller (104) for installation on the storage device (106);
transferring the firmware module (120) from the storage controller (104) to the storage device (106) for storage thereon;
sending, by the storage controller (104), a notification to the controller (102) when the transfer of the firmware module (120) to the storage device (106) is complete; and
upon receiving the notification, notifying, by the controller (102), the central processing unit (114) to resume access to the firmware module (120).

2. The method of Claim 1, wherein causing the firmware module (120) to be communicated to the storage controller (104) for installation on the storage device (106) comprises buffering the firmware module (120) in a memory (204) and transmitting the firmware module (120) from the memory (204) to the storage controller (104).

3. The method of any one of claims 1-2, wherein causing the firmware module (120) to be communicated to the storage controller (104) for installation on the storage device (106) comprises:
requesting that the firmware module (120) be transferred via remote direct memory access (RDMA) into a system memory (124) coupled to the central processing unit (114); and
communicating a location of the firmware module (120) in the system memory (124) to the storage controller (104).

4. The method of any one of claims 1-3, further comprising:
periodically polling, by the controller (102), the computing system (100) over the network (110,112) to inquire whether a firmware update is available;
receiving an indication from the computing system (100) that a firmware update is available; and
requesting the firmware module (120) from the computing system (100) responsive to the indication.

5. The method of any one of claims 1-3, further comprising requesting, by the controller (102), the firmware module (120) from the computing system (100) over the network (110, 112) responsive to a trigger.

6. The method of claim 5, wherein the trigger comprises a determination that a Basic Input/Output System (BIOS) module is unbootable and wherein the firmware module(120) is a BIOS module to replace the unbootable BIOS module.

7. The method of any one of claims 1-6, further comprising storing, by the storage controller (104), the firmware module (120) on a first partition (116A) of the storage device (106) that is separate from a second partition (116B) that stores a previous version of the firmware module (120).

8. The method of any one of claims 1-7 further comprising establishing, by the storage controller (104), a secure channel with the associated storage device (106) prior to the transfer of the firmware module (120).

9. The method of claim 1, wherein the controller (102) is coupled to a network controller (108) to interface with the network (110,112).

10. An apparatus comprising means for performing the method of any of claims 1-9.

11. A computer readable medium including instructions, when executed, to perform the method of any of claims 1-9.

## Patentansprüche

1. Verfahren, das Folgendes umfasst:
Anfordern durch eine Steuereinheit (102), die in einer Außerband-Weise in Bezug auf eine zentrale Verarbeitungseinheit (114) arbeitet, eines Firmware-Moduls (120) von einem Rechensystem (100) über ein Netz (110, 112); und
Anweisen durch die Steuereinheit (102) der zentralen Verarbeitungseinheit (114), einen Zugriff auf eine vorherige Version des Firmware-Moduls (120) zu beenden, bevor bewirkt wird, dass das Firmware-Modul (120) an eine Speichersteuereinheit (104) für eine Installation auf einer Speichervorrichtung (106) übermittelt wird, wobei die Steuereinheit (102) an die zentrale Verarbeitungseinheit (114) und die Speichersteuereinheit (104) gekoppelt ist;
Bewirken, dass das Firmware-Modul (120) an die Speichersteuereinheit (104) für eine Installation auf der Speichervorrichtung (106) übermittelt wird;
Übertragen des Firmware-Moduls (120) von der Speichersteuereinheit (104) an die Speichervorrichtung (106) für eine Speicherung auf ihr;
Senden durch die Speichersteuereinheit (104) einer Benachrichtigung an die Steuereinheit (102), wenn die Übertragung des Firmware-Moduls (120) an die Speichervorrichtung (106) abgeschlossen ist; und
beim Empfangen der Benachrichtigung Melden durch die Steuereinheit (102) der zentralen Verarbeitungseinheit (114), einen Zugriff auf das Firmware-Modul (120) wiederaufzunehmen.

2. Verfahren nach Anspruch 1, wobei das Bewirken, dass das Firmware-Modul (120) an die Speichersteuereinheit (104) für eine Installation auf der Speichervorrichtung(106) übermittelt wird, umfasst, das Firmware-Modul (120) in einem Speicher (204) zwischenzuspeichern und das Firmware-Modul (120) von dem Speicher (204) an die Speichersteuereinheit (104) zu senden.

3. Verfahren nach einem der Ansprüche 1-2, wobei das Bewirken, dass das Firmware-Modul (120) an die Speichersteuereinheit (104) für eine Installation auf der Speichervorrichtung (106) übermittelt wird, Folgendes umfasst:
Anfordern, dass das Firmware-Modul (120) über einen Ferndirektspeicherzugriff (RDMA) in einen Systemspeicher (124), der an die zentrale Verarbeitungseinheit (114) gekoppelt ist, übertragen wird; und
Übermitteln eines Orts des Firmware-Moduls (120) in dem Systemspeicher (124) an die Speichersteuereinheit (104) .

4. Verfahren nach einem der Ansprüche 1-3, das ferner Folgendes umfasst:
periodisch Abfragen durch die Steuereinheit (102) des Rechensystems (100) über das Netz (110, 112), um sich zu erkundigen, ob eine Firmware-Aktualisierung verfügbar ist;
Empfangen einer Angabe von dem Rechensystem (100), dass eine Firmware-Aktualisierung verfügbar ist; und
Anfordern des Firmware-Moduls (120) von dem Rechensystem (100) als Reaktion auf die Angabe.

5. Verfahren nach einem der Ansprüche 1-3, das ferner umfasst, durch die Steuereinheit (102) das Firmware-Modul (120) von dem Rechensystem (100) über das Netz (110, 112) als Reaktion auf einen Auslöser anzufordern.

6. Verfahren nach Anspruch 5, wobei der Auslöser eine Bestimmung umfasst, dass ein Basis-Eingabe/Ausgabe-System-Modul (BIOS-Modul) nicht bootfähig ist, und wobei das Firmware-Modul (120) ein BIOS-Modul ist, um das nicht bootfähige BIOS-Modul zu ersetzen.

7. Verfahren nach einem der Ansprüche 1-6, das ferner umfasst, durch die Speichersteuereinheit (104) das Firmware-Modul (120) auf einer ersten Partition (116A) der Speichervorrichtung (106) zu speichern, die von einer zweiten Partition (116B) getrennt ist, die eine vorherige Version des Firmware-Moduls (120) speichert.

8. Verfahren nach einem der Ansprüche 1-7, das ferner umfasst, durch die Speichersteuereinheit (104) einen sicheren Kanal mit der zugeordneten Speichervorrichtung (106) vor dem Übertragen des Firmware-Moduls (120) einzurichten.

9. Verfahren nach Anspruch 1, wobei die Steuereinheit (102) an eine Netzsteuereinheit (108) gekoppelt ist, um über eine Schnittstelle mit dem Netz (110, 112) verbunden zu sein.

10. Vorrichtung, die Mittel zum Ausführen des Verfahrens nach einem der Ansprüche 1-9 umfasst.

11. Computerlesbares Medium, das Anweisungen enthält, die dann, wenn sie ausgeführt werden, das Verfahren nach einem der Ansprüche 1-9 ausführen.

## Revendications

1. Procédé consistant à :
demander, par un contrôleur (102) qui fonctionne de manière hors bande par rapport à une unité de traitement centrale (114), un module de micrologiciel (120) à partir d'un système informatique (100) sur un réseau (110, 112) ; et
donner instruction, par le contrôleur (102), à l'unité de traitement centrale (114) de cesser l'accès à une version précédente du module de micrologiciel (120) avant d'amener le module de micrologiciel (120) à être communiqué à un contrôleur de stockage (104) pour une installation sur un dispositif de stockage (106), le contrôleur (102) étant couplé à l'unité de traitement centrale (114) et au contrôleur de stockage (104) ;
amener le module de micrologiciel (120) à être communiqué au contrôleur de stockage (104) pour une installation sur le dispositif de stockage (106) ;
transférer le module de micrologiciel (120) du contrôleur de stockage (104) au dispositif de stockage (106) en vue d'un stockage sur celui-ci ;
envoyer, par le contrôleur de stockage (104), une notification au contrôleur (102) lorsque le transfert du module de micrologiciel (120) au dispositif de stockage (106) est terminé ; et
à la réception de la notification, notifier, par le contrôleur (102), à l'unité de traitement centrale (114) de reprendre l'accès au module de micrologiciel (120).

2. Procédé selon la revendication 1, dans lequel amener le module de micrologiciel (120) à être communiqué au contrôleur de stockage (104) pour une installation sur le dispositif de stockage (106) consiste à mettre en mémoire tampon le module de micrologiciel (120) dans une mémoire (204) et à transmettre le module de micrologiciel (120) de la mémoire (204) au contrôleur de stockage (104).

3. Procédé selon l'une quelconque des revendications 1 à 2, dans lequel amener le module de micrologiciel (120) à être communiqué au contrôleur de stockage (104) pour une installation sur le dispositif de stockage (106) consiste à :
demander que le module de micrologiciel (120) soit transféré par le biais d'un accès direct à la mémoire à distance (RDMA) dans une mémoire de système (124) couplée à l'unité de traitement centrale (114) ; et
communiquer un emplacement du module de micrologiciel (120) dans la mémoire de système (124) au contrôleur de stockage (104).

4. Procédé selon l'une quelconque des revendications 1 à 3, consistant en outre à :
interroger périodiquement, par le contrôleur (102), le système informatique (100) sur le réseau (110, 112) pour demander si une mise à jour de micrologiciel est disponible ;
recevoir une indication provenant du système informatique (100) qu'une mise à jour de micrologiciel est disponible ; et
demander le module de micrologiciel (120) à partir du système informatique (100) en réponse à l'indication.

5. Procédé selon l'une quelconque des revendications 1 à 3, consistant en outre à demander, par le contrôleur (102), le module de micrologiciel (120) à partir du système informatique (100) sur le réseau (110, 112) en réponse à un déclenchement.

6. Procédé selon la revendication 5, dans lequel le déclenchement comprend une détermination qu'un module de système d'entrée/sortie de base (BIOS) ne peut pas être démarré, et le module de micrologiciel (120) étant un module BIOS pour remplacer le module BIOS ne pouvant pas être démarré.

7. Procédé selon l'une quelconque des revendications 1 à 6, consistant en outre à stocker, par le contrôleur de stockage (104), le module de micrologiciel (120) sur une première partition (116A) du dispositif de stockage (106) qui est séparée d'une seconde partition (116B) qui stocke une version précédente du module de micrologiciel (120).

8. Procédé selon l'une quelconque des revendications 1 à 7, consistant en outre à établir, par le contrôleur de stockage (104), un canal sécurisé avec le dispositif de stockage associé (106) avant le transfert du module de micrologiciel (120).

9. Procédé selon la revendication 1, dans lequel le contrôleur (102) est couplé à un contrôleur de réseau (108) pour interfacer avec le réseau (110, 112).

10. Appareil comprenant des moyens de mettre en œuvre le procédé selon l'une quelconque des revendications 1 à 9.

11. Support lisible par ordinateur incluant des instructions qui, lorsqu'elles sont exécutées, mettent en œuvre le procédé selon l'une quelconque des revendications 1 à 9.
